# EUROPÄISCHE PATENTANMELDUNG

(11) **EP 2 645 031 A1**
(43) Veröffentlichungstag der Anmeldung: **02.10.2013**
(21) Anmeldenummer: 12002944.2
(22) Anmeldetag: 26.04.2012
(51) Int. Cl.: F25J 3/04

(54) **Trennsäule für eine Tieftemperatur-Luftzerlegungsanlage, Tieftemperatur-Luftzerlegungsanlage und Verfahren zur Tieftemperaturzerlegung von Luft**

(30) Priorität: 29.03.2012 DE 102012006480
(71) Anmelder: Linde Aktiengesellschaft, 80331 Munich (DE)
(72) Erfinder: Moll, Anton, 82399 Raisting (DE)
(74) Vertreter: Imhof, Dietmar

(57) **Zusammenfassung**

Die Erfindung betrifft eine Trennsäule für eine Tieftemperatur-Luftzerlegungsanlage mit einem Behälter mit einem im Wesentlichen zylindrischen Behältermantel, einer Zuleitung (6; 14) für ein Gemisch aus Luftkomponenten, einer Produktleitung (9, 10; 16) für eine an einer Luftkomponente angereicherte Fraktion und mit in dem Behälter angeordneten Stoffaustauschelementen. Die Stoffaustauschelemente werden in mindestens einem Teilbereich (E) durch eine geordnete Packung gebildet, die aus gefalteten Metallblechen gebildet ist und eine spezifische Oberfläche von mehr als 750 m²/m³ aufweist. Die Metallbleche bestehen aus Kupfer und weisen eine Blechstärke von 0,1 mm oder weniger auf. Außerdem betrifft die Erfindung eine Vorrichtung und ein Verfahren zur Tieftemperaturzerlegung von Luft, in denen eine derartige Trennsäule eingesetzt wird.

## Beschreibung

Die Erfindung betrifft eine Trennsäule für eine Tieftemperatur-Luftzerlegungsanlage gemäß dem Oberbegriff des Patentanspruchs 1.

Üblicherweise werden in Luftzerlegungsanlagen geordnete Packungen (structured packing) einer spezifischen Oberfläche (Packungsdichte) von 250 bis 750 m²/m³ eingesetzt. Vereinzelt wurde auch vorgeschlagen, höhere Packungsdichten einzusetzen, um die Wirksamkeit der Packung zu erhöhen, indem die Höhe pro theoretischem Boden (HETP = height per theoretical plate) verringert wird. Damit lässt sich eine relativ geringe Bauhöhe erreichen. Im Folgenden werden die Begriffe "spezifische Oberfläche einer Packung" und "Packungsdichte" synonym verwendet. Eine besonders "dichte" Packung besitzt also eine besonders hohe spezifische Oberfläche.

Die Trennsäule kann beispielsweise durch die Niederdrucksäule eines Zwei-SäulenSystems gebildet werden, das eine Hochdrucksäule und eine Niederdrucksäule aufweist. Die "Zuleitung" wird dann durch den Einlass der Niederdrucksäule gebildet, über die sauerstoffangereicherte Flüssigkeit aus dem Sumpf der Drucksäule in die Niederdrucksäule gelangt. Über die "Produktleitung für eine an einer Luftkomponente angereicherte Fraktion" wird sauerstoffreiches Fluid aus dem unteren Abschnitt der Säule abgezogen und direkt oder indirekt als flüssiges oder gasförmiges Produkt abgeführt. Die Produktleitung ist hier vorzugsweise unmittelbar am Sumpf oder etwas darüber angeordnet, wobei der Sumpf der Niederdrucksäule den Verdampfungsraum eines Hauptkondensators enthält, über den die Niederdrucksäule in wärmetauschender Verbindung mit der Hochdrucksäule steht; alternativ ist die Produktleitung an einem Nebenkondensator zur Verdampfung des sauerstoffreichen Produkts angeordnet, an einem Hauptwärmetauscher, in dem das sauerstoffreiche Produkt in indirekten Wärmeaustausch mit Einsatzluft gebracht wird, oder am Verdampfungsraum eines Hauptkondensators, der außerhalb der Niederdrucksäule angeordnet ist.

Alternativ kann es sich bei der Trennsäule zum Beispiel um eine Rohargonsäule handeln, in der Rohargon aus einem Sauerstoff-Argon-Gemisch gewonnen wird. Über die "Zuleitung" wird in diesem das Sauerstoff-Argon-Gemisch aus der Niederdrucksäule abgezogen; im oberen Bereich ist die "Produktleitung für eine an einer Luftkomponente angereicherte Fraktion" angeordnet, über die das vom Sauerstoff getrennte Rohargon abgezogen wird. Die Rohargonsäule kann einteilig wie in EP 377117 B2 = US 5019145 gezeigt oder mehrteilig, beispielsweise zweiteilig wie in EP 628777 B1 = US 5426946 gezeigt ausgebildet sein.

Weiter alternativ kann die Trennsäule durch eine Methan-Ausschleussäule gebildet werden, die mit der Niederdrucksäule verbunden ist; über deren Kopf wird Methan zusammen mit einem gasförmigen Sauerstoffprodukt ausgeschleust, am Sumpf wird eine krypton- und xenonreiche Sauerstofffraktion abgezogen. Selbstverständlich kann der Einsatz der dichten Kupferpackung auch in mehreren der genannten Trennsäulen gleichzeitig stattfinden.

Ein Trennsäule der eingangs genannten Art ist aus EP 636237 B1 = WO 9319336 A1 = US 5613374 bekannt.

Geordnete Packungen für Luftzerlegungsanlagen werden bisher aus Aluminium gefertigt. Aus Sicherheitsgründen (siehe EIGA "Safe use of aluminium-structured packing for oxygen distillation" IGC Document 144/08/E) ist das Packungsblech mindestens im Sauerstoffbereich 0,2 mm dick. Sie weisen bei hoher Packungsdichte den Nachteil auf, dass die Kapazität pro Kolonnenquerschnitt spürbar niedriger als bei geringerer Packungsdichte ist; die Kolonne muss also bei gleicher Kapazität einen relativ großen Durchmesser aufweisen. Entsprechend stark steigen die Herstellungskosten einer entsprechenden Trennsäule und der gesamten Luftzerlegungsanlage.

Der Erfindung liegt die Aufgabe zugrunde, eine Trennsäule der eingangs genannten Art anzugeben, die einen vergleichsweise geringen Fertigungsaufwand, insbesondere relativ niedrige Fertigungskosten ermöglicht.

Diese Aufgabe wird durch die kennzeichnenden Merkmale des Patentanspruchs 1 gelöst.

Die Verwendung eines relativ teuren Materials wie Kupfer scheint der genannten Aufgabe zunächst zu widersprechen. Allerdings hat sich im Rahmen der Erfindung herausgestellt, dass aufgrund der mechanischen und chemischen Materialeigenschaften von Kupfer eine sehr dichte Packung mit sehr geringer Blechstärke hergestellt werden kann. Bei den mit einer solchen Packung vorgenommenen Versuchen wurde weiterhin festgestellt, dass gegenüber den bisher bekannten dichten Packungen eine überraschend hohe Steigerung der Kapazität der Kolonne pro Kolonnenquerschnitt erzielt werden kann.

Entsprechend der Blechdicke verringert sich bei höherer spezifischer Oberfläche der freie Querschnitt der Trennsäule, der für aufsteigendes Gas zur Verfügung steht. Bei Einsatz üblicher Packungsdichten ist dieser Verlust an Lückenvolumen relativ gering und der damit verbundene an Kapazität verschmerzbar. Wenn man aber die Packungsdichte deutlich erhöhen will, z. B. von 500 m²/m³ auf 1200 m²/m³, dann nimmt das Lückenvolumen bei einer Blechdicke von 0,2 mm von 95% auf 88% ab.

Im Rahmen der Erfindung kann eine Kolonne jedoch bei gleich bleibend hoher Kapazität und gleicher Höhe deutlich schlanker gebaut werden. Bei der Fertigung entsteht also eine Kosteneinsparung an Packungsmaterial, die weit überproportional der Verringerung an Blechdicke ist. Erst diese, im Zuge der Erfindung ersichtlich gewordenen überraschenden Vorteile rechtfertigen den Einsatz eines teuren Materials.

Unter "Kupfer" wird hier reines Kupfer oder eine Legierung mit einem Kupfergehalt von mindestens 67 %, vorzugsweise mindestens 80 %, höchst vorzugsweise mindestens 90 % verstanden (jeweils bezogen auf die Masse). Insbesondere umfasst der Begriff "Kupfer" sämtliche in Anhang C des EIGA-Dokuments IGC Doc 13/02/E als "Kupfer" und "Kupfer-Nickel-Legierungen" bezeichneten Materialien ("Copper"/"Copper-Nickel Alloys" in EIGA - OXYGEN PIPELINE SYSTEMS - IGC Doc 13/02/E herausgegeben von der European Industrial Gases Association).

Vorzugsweise weist die geordnete Packung aus Kupfer eine spezifische Oberfläche von mehr als 1.000 m²/m³, insbesondere von mehr als 1.150 ²/m³ auf. Beispielsweise kann ihre Packungsdichte 1.200 oder 1250 m²/m³ betragen.

Wenn die Trennsäule einen Sumpfverdampfer aufweist, ist es günstig, wenn die unmittelbar über dem Sumpfverdampfer angeordneten Stoffaustauschelemente durch die geordnete Packung aus Kupfer gebildet werden. Vorzugsweise wird mindestens in dem gesamten untersten Stoffaustauschabschnitt der Trennsäule eine solche geordnete Kupferpackung mit einer spezifischen Oberfläche von mehr als 750 m²/m³ und einer Blechdicke von 0,1 mm oder weniger eingesetzt. Diese Ausführungsform der Erfindung ist besonders günstig, wenn die Trennsäule durch eine Niederdrucksäule einer mindestens zweistufigen Tieftemperatur-Luftzerlegungsanlage gebildet wird, wobei der Hauptkondensator als Sumpfverdampfer in der Niederdrucksäule angeordnet ist. Oberhalb der Kupferpackung kann in der Trennsäule eine Packung derselben Geometrie, aber aus einem anderen Material, z. B. aus Aluminium, verwendet werden, eine geordnete Packung anderer Geometrie oder auch ein oder mehrere andere Typen von Stoffaustauschelementen wie zum Beispiel Füllkörper (ungeordnete Packung) oder klassische Stoffaustauschböden.
Bei der Erfindung kann es günstig sein, wenn zum Beispiel mindestens der gesamte unterste Abschnitt der Niederdrucksäule vollständig mit dem im Patentanspruch 1 beschriebenen Packungstyp gefüllt ist. Die Erfindung kann aber auch dadurch realisiert werden, dass der Teilbereich, in dem diese spezielle Packung eingesetzt ist, sich nur über einen Teil des untersten Abschnitts der Niederdrucksäule erstreckt und im Rest dieses Abschnitts andere Stoffaustauschelemente eingebaut sind.

Die Erfindung bezieht sich außerdem auf eine Tieftemperatur-Luftzerlegungsanlage gemäß den Patentansprüchen 4 bis 8, sowie auf ein Verfahren zur Tieftemperaturzerlegung von Luft gemäß den Patentansprüchen 9 beziehungsweise 10.

Verfahren und Vorrichtungen zur Tieftemperaturzerlegung von Luft sind zum Beispiel aus Hausen/Linde, Tieftemperaturtechnik, 2. Auflage 1985, Kapitel 4 (Seiten 281 bis 337) bekannt.

Das Destillationssäulen-System der Erfindung kann als Ein-Säulen-System zur Stickstoff-Sauerstoff-Trennung ausgebildet sein, als Zwei-Säulen-System (zum Beispiel als klassisches Linde-Doppelsäulensystem), oder auch als Drei- oder Mehr-Säulen-System. Es kann zusätzlich zu den Kolonnen zur Stickstoff-Sauerstoff-Trennung weitere Vorrichtungen zur Gewinnung hochreiner Produkte und/oder anderer Luftkomponenten, insbesondere von Edelgasen aufweisen, beispielsweise eine Argongewinnung und/oder eine Krypton-Xenon-Gewinnung.

Die Erfindung bezieht sich insbesondere auf Luftzerlegungsanlagen im industriellen Maßstab, bei denen im Normalbetrieb mindestens 5.000 Nm³/h Einsatzluft verarbeitet werden.

Nach oben hin ist die Größe der Luftzerlegungsanlagen, bei denen die Erfindung angewendet werden kann, grundsätzlich unbegrenzt. Besonders günstig ist ihre Anwendung jedoch im Bereich der so genannten "Packaged Units", bei denen ein oder mehrere Module des kalten Anlagenteils als Coldboxen vorgefertigt und anschließend komplett zur Baustelle transportiert werden. Solchen Anlagen verarbeiten regelmäßig weniger als 250.000, vorzugsweise weniger als 150.000 Nm³/h Einsatzluft im Normalbetrieb.

Die Erfindung sowie weitere Einzelheiten der Erfindung werden im Folgenden anhand eines in den Zeichnungen schematisch dargestellten Ausführungsbeispiels näher erläutert. Hierbei zeigen:
- Figur 1: ein vereinfachtes Prozessdiagramm einer ersten Tieftemperatur-Luftzerlegungsanlage gemäß der Erfindung,
- Figur 2: ein Blech einer geordneten Kupferpackung im Detail.

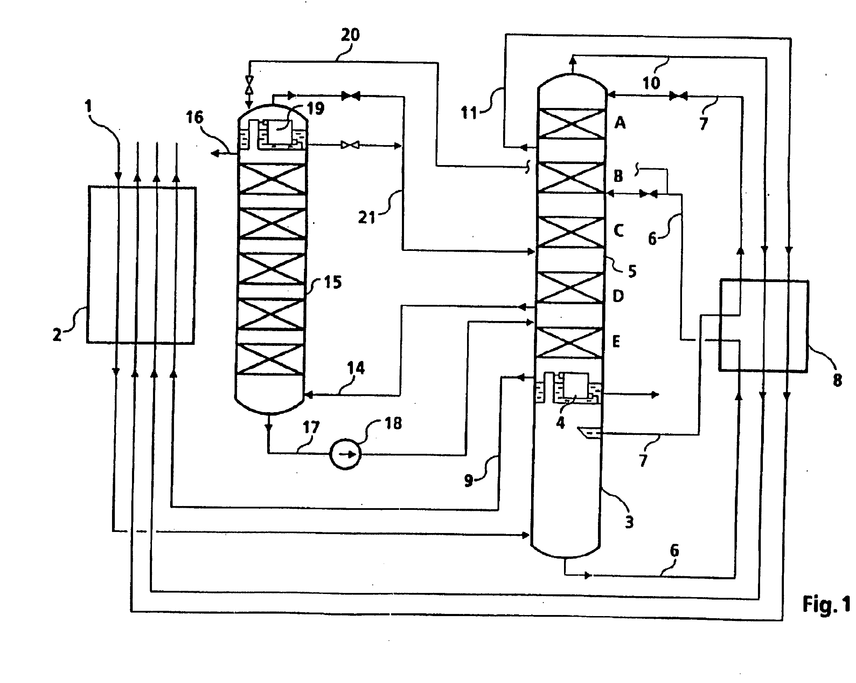

Bei dem in Figur 1 dargestellten Verfahren wird gereinigte Luft 1 unter einem Druck von 4 bis 20 bar, vorzugsweise 5 bis 12 bar in einem Wärmetauscher 2 gegen Produktströme auf etwa Taupunkt abgekühlt und in das Destillationssäulen-System eingeleitet, das hier eine Hochdrucksäule 3, eine Niederdrucksäule 5 und eine Rohargonsäule 15 aufweist. Die Hochdrucksäule 3 steht über einen gemeinsamen Kondensator-Verdampfer 4, den Hauptkondensator, in Wärmeaustauschbeziehung zu einer Niederdrucksäule 5. In dem Ausführungsbeispiel wird die gesamte Einsatzluft 1 in die Hochdrucksäule 3 eingeführt.

Sumpfflüssigkeit 6 und Stickstoff 7 werden aus der Hochdrucksäule 3 abgezogen, in einem Gegenströmer 8 unterkühlt und in die Niederdrucksäule 5 eingedrosselt. Aus der Niederdrucksäule werden Sauerstoff über Produktleitungen Sauerstoff 9, Stickstoff 10 und unreiner Stickstoff 11 entnommen. Die Produkte können auch mindestens teilweise flüssig entnommen werden. Dies ist der Übersichtlichkeit halber in dem Verfahrensschema nicht dargestellt.

Über eine Argonübergangsleitung 14 ("Zuleitung" zur Rohargonsäule) wird ein argonhaltiger Sauerstoffstrom aus dem unteren Bereich der Niederdrucksäule 5 (unterhalb der Sumpfflüssigkeitsleitung 6) entnommen, in den unteren Bereich einer Rohargonsäule 15 geleitet und dort in ein Rohargonprodukt 16 und eine Restfraktion 17 zerlegt. Die Restfraktion wird in die Niederdrucksäule zurückgeleitet. Sie kann entweder über die Leitung 14 zurückfließen (falls ein entsprechendes Gefälle vorhanden ist) oder, wie in Figur 1 gezeigt, mittels einer Pumpe 18 über eine eigene Leitung 17 gefördert werden.

Der Kopf der Rohargonsäule wird durch einen Rohargonkondensator 19 gekühlt, auf dessen Verdampfungsseite über Leitung 20 herangeführte Sumpfflüssigkeit aus der Hochdrucksäule 3 verdampft wird. Die verdampfte Fraktion wird über Leitung 21 zur Niederdrucksäule geführt. Sie kann beispielsweise auf Höhe der Sumpfflüssigkeitsleitung 6 eingeleitet werden. Besonders vorteilhaft ist jedoch eine Einspeisung zwischen Mündung der Sumpfflüssigkeitsleitung 6 und Anschluss der Argonübergangsleitung 14.

Auf bekannte Weise wird bei dem Verfahren Kälte durch arbeitsleistende Entspannung eines oder mehrerer Prozessströme in einer oder mehreren Turbinen erzeugt. Dies ist in dem vereinfachten Schema nicht dargestellt.

Die Niederdrucksäule 5 weist in dem Ausführungsbeispiel die folgenden Abschnitte auf:
A Rein-Stickstoff-Abschnitt (oberhalb der Unreinstickstoffleitung 11)
B Unrein-Stickstoff-Abschnitt (begrenzt durch Unreinstickstoffleitung 11 und Sumpfflüssigkeitsleitung 6)
C Unrein-Sauerstoff-Abschnitt (begrenzt durch Sumpfflüssigkeitsleitung 6 und Leitung 21 zur Einführung der teilweise verdampften Fraktion aus dem Rohargonkondensator 19),
D Argon-Zwischenabschnitt (begrenzt durch Leitung 21 zur Einführung der verdampften Fraktion aus dem Rohargonkondensator 19 und Entnahmeleitung 14 für die in der Rohargonsäule zu zerlegende argonhaltige Sauerstofffraktion),
E Sauerstoff-Abschnitt (unterhalb der Entnahmeleitung 14 für die in der Rohargonsäule zu zerlegende argonhaltige Sauerstofffraktion und unmittelbar über dem Sumpfverdampfer = Hauptkondensator 4).

Im Abschnitt E der Niederdrucksäule 5 herrscht im Normalbetrieb der Anlage eine Sauerstoffkonzentration von 95 mol-% oder mehr. Die Sauerstoffkonzentration steigt insbesondere von 87 mol-% am oberen Ende des Abschnitts E auf bis zu 99,95% am unteren Ende. Bei dem Ausführungsbeispiel werden folgende Stoffaustauschelemente in den verschiedenen Abschnitten der Niederdrucksäule 5 eingesetzt:
A Rein-Stickstoff-Abschnitt: konventionelle Rektifizierböden, insbesondere Siebböden
B Unrein-Stickstoff-Abschnitt: Geordnete Aluminiumpackung, die aus gefalteten Metallblechen einer Blechstärke von 0,10 mm besteht und eine spezifische Oberfläche von 750 m²/m³ aufweist
C Unrein-Sauerstoff-Abschnitt: Geordnete Aluminiumpackung, die aus gefalteten Metallblechen einer Blechstärke von 0,10 mm besteht und eine spezifische Oberfläche von 750 m²/m³ aufweist
D Argon-Zwischenabschnitt: Geordnete Aluminiumpackung, die aus gefalteten Metallblechen einer Blechstärke von 0,10 mm besteht und eine spezifische Oberfläche von mehr als 1000 m²/m³, insbesondere von 1250 m²/m³ aufweist
E Sauerstoff-Abschnitt: Geordnete Kupferpackung, die aus gefalteten Metallblechen aus Cu-DHP R200 nach DIN EN 13599 einer Blechstärke von 0,05 mm besteht und eine spezifische Oberfläche von mehr als 1000 m²/m³, insbesondere von 1250 m²/m³ aufweist

Die Rohargonsäule 15 weist fünf Stoffaustausch-Abschnitte auf. Diese werden in dem Ausführungsbeispiel alle durch geordnete Packung gebildet, die aus gefalteten Aluminiumblechen einer Blechstärke von 0,10 mm besteht und eine spezifische Oberfläche von mehr als 1000 m²/m³, insbesondere von 1250 m²/m³ aufweist.

Die Hochdrucksäule 3 kann grundsätzlich ganz oder teilweise mit geordneter Packung, zum Beispiel aus Aluminium ausgestattet sein. In dem Ausführungsbeispiel werden jedoch ausschließlich Siebböden verwendet.

Abweichend von dem Ausführungsbeispiel können innerhalb eines oder mehrerer der oben aufgeführten Abschnitte auch Kombinationen unterschiedlicher Arten von Stoffaustauschelementen eingesetzt werden, zum Beispiel eine Kombination von geordneten Packungen unterschiedlicher spezifischer Oberfläche oder eine Kombination von geordneter Packung und konventionellen Rektifizierböden.

In Abweichung von der in Figur 1 dargestellten Ausführungsform kann ein Teil der zu zerlegenden Luft in einer Turbine arbeitsleistend entspannt und unter Umgehung der Vorzerlegung in der Hochdrucksäule 3 direkt in die Niederdrucksäule 5 eingeblasen, beispielsweise zwischen den Abschnitten C und D oder zwischen den Abschnitten B und C. In weiter abweichenden Ausführungsformen kann die Rohargonsäule weggelassen und/oder eine Mischsäule ergänzt werden, in der flüssiges Sauerstoffprodukt der Niederdrucksäule in direktem Stoffaustausch mit einem Teil der Einsatzluft verdampft und schließlich als gasförmiges Unrein-Sauerstoffprodukt gewonnen wird.

In einer weiteren alternativen Ausführungsform wird in mindestens einem Teilbereich der Rohargonsäule 15 eine geordnete Packung eingesetzt, die aus gefalteten Kupferblechen gebildet ist, eine spezifische Oberfläche von mehr als 750 m²/m³, insbesondere von mehr als 1.000 m²/m³ oder mehr als 1.150 m²/m³, beispielsweise von 1.250 aufweist, wobei die Kupferbleche eine Blechstärke von 0,1 mm oder weniger aufweisen, beispielsweise von 0,05 mm.

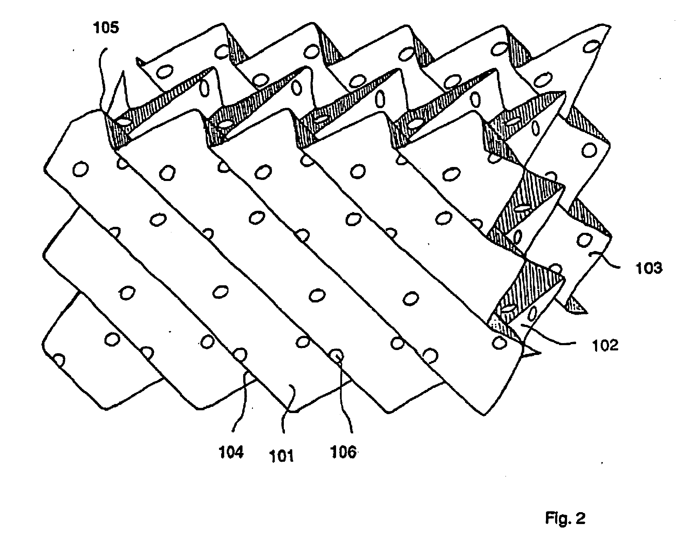

In Figur 2 ist ein Ausschnitt aus der im Abschnitt E der Niederdrucksäule verwendeten Kupferpackung gezeigt. Es sind drei Schichten dargestellt. Zur Verdeutlichung der räumlichen Struktur sind Schatten als Schraffuren angedeutet.

Die gefalteten Metallbleche 101, 102, 103 sind vorzugsweise so angeordnet, dass die Falze (z.B. 104, 105) schräg zur Kolonnenachse (Vertikalen) verlaufen. Die jeweils übernächsten Lamellen 101, 103 weisen dieselbe Orientierung auf. Die dazwischenliegende Lamelle 102 ist so ausgerichtet, dass ihre Falze im Winkel - vorzugsweise senkrecht - zu denjenigen der benachbarten Lamellen verläuft.

Die (Grob-)Faltung der Metallbleche weist in dem Ausführungsbeispiel eine Periode von 4,7 mm auf. Die Oberfläche der Metallbleche zwischen zwei Falzen (z. B. zwischen 104 und 105) ist mit einer Feinriffelung versehen (in der Zeichnung nicht dargestellt). Außerdem weisen die Metallbleche Öffnungen (Löcher 106) auf.

## Patentansprüche

1. Trennsäule für eine Tieftemperatur-Luftzerlegungsanlage mit
- einem Behälter mit einem im Wesentlichen zylindrischen Behältermantel,
- einer Zuleitung (6; 14) für ein Gemisch aus Luftkomponenten,
- einer Produktleitung (9, 10; 16) für eine an einer Luftkomponente angereicherte Fraktion und mit
- in dem Behälter angeordneten Stoffaustauschelementen,
- wobei die Stoffaustauschelemente mindestens in mindestens einem Teilbereich (E) durch eine geordnete Packung gebildet werden,
- die aus gefalteten Metallblechen gebildet ist
- und eine spezifische Oberfläche von mehr als 750 m²/m³ aufweist,
**dadurch gekennzeichnet, dass**
- die Metallbleche aus Kupfer bestehen und
- eine Blechstärke von 0,1 mm oder weniger aufweisen.

2. Trennsäule nach Anspruch 1, **dadurch gekennzeichnet, dass** die geordnete Packung aus Kupfer eine spezifische Oberfläche von mehr als 1.000 m²/m³, insbesondere von mehr als 1.150 m²/m³ aufweist.

3. Trennsäule nach Anspruch 1 oder 2, **dadurch gekennzeichnet, dass** die Trennsäule einen Sumpfverdampfer (4) aufweist und die unmittelbar über dem Sumpfverdampfer (4) angeordneten Stoffaustauschelemente (E) durch die geordnete Packung aus Kupfer gebildet werden.

4. Tieftemperatur-Luftzerlegungsanlage mit einem Destillationssäulen-System, das mindestens eine Trennsäule (3, 5, 15) aufweist, mit einer Einsatzluftleitung (1) zum Einführen von Einsatzluft in das Destillationssäulen-System, **dadurch gekennzeichnet, dass** die Trennsäule oder mindestens eine (5; 15) der Trennsäulen des Destillationssäulen-Systems als Trennsäule gemäß einem der Ansprüche 1 bis 3 ausgeführt ist.

5. Tieftemperatur-Luftzerlegungsanlage nach Anspruch 4, **dadurch gekennzeichnet, dass** das Destillationssäulen-System eine Hochdrucksäule (3) und eine Niederdrucksäule (5) mit einer Produktleitung (9) zum Entnehmen eines sauerstoffreichen Produkts aufweist, wobei die Niederdrucksäule (5) als Trennsäule gemäß einem der Ansprüche 1 bis 3 ausgeführt ist.

6. Tieftemperatur-Luftzerlegungsanlage nach Anspruch 4 oder 5, **dadurch gekennzeichnet, dass** das Destillationssäulen-System eine Rohargonsäule (15) mit einer Produktleitung (16) zum Entnehmen von Rohargon aufweist, wobei die Rohargonsäule (15) als Trennsäule gemäß einem der Ansprüche 1 bis 3 ausgeführt ist.

7. Tieftemperatur-Luftzerlegungsanlage nach einem der Ansprüche 4 bis 6, **dadurch gekennzeichnet, dass** die Anlage zur Verarbeitung von mehr als 5.000 Nm³/h Einsatzluft geeignet ist.

8. Tieftemperatur-Luftzerlegungsanlage nach einem der Ansprüche 4 bis 7, **dadurch gekennzeichnet, dass** die Anlage zur Verarbeitung von weniger als 150.000 Nm³/h Einsatzluft im Normalbetrieb ausgelegt ist.

9. Verfahren zur Tieftemperaturzerlegung von Luft in einem Destillationssäulen-System, das mindestens eine Trennsäule (3, 5, 15) aufweist, wobei Einsatzluft über mindestens eine Einsatzluftleitung (1) in das Destillationssäulen-System eingeleitet wird, **dadurch gekennzeichnet, dass** die Trennsäule oder mindestens eine (5; 15) der Trennsäulen des Destillationssäulen-Systems als Trennsäule gemäß einem der Ansprüche 1 bis 3 ausgeführt ist.

10. Verfahren nach Anspruch 9, **dadurch gekennzeichnet, dass** das Verfahren in einer Tieftemperatur-Luftzerlegungsanlage gemäß einem der Ansprüche 4 bis 8 durchgeführt wird.
